# EUROPÄISCHE PATENTSCHRIFT

(11) **EP 1 361 373 B1**
(45) Veröffentlichungstag und Bekanntmachung des Hinweises auf die Patenterteilung: **21.05.2008**
(21) Anmeldenummer: 03006029.7
(22) Anmeldetag: 19.03.2003
(51) Int. Cl.: F16C 33/38

(54) **Achsgetriebe für ein Kraftfahrzeug, mit zweireihigen Schrägkugellagern**
Differential for a motor car, with double row angular contact ball bearings
Différentiel pour un véhicule automobile, avec roulements à contact oblique à double rangées de billes

(30) Priorität: 10.05.2002 DE 10220689
(43) Veröffentlichungstag der Anmeldung: 12.11.2003
(73) Patentinhaber: Schaeffler KG, 91074 Herzogenaurach (DE)
(72) Erfinder: Kern, Roland, 91074 Herzogenaurach (DE); Beck, Tino, 96138 Burgebrach (DE); Schöpplein, Helmut, 96188 Stettfeld (DE)

(56) Entgegenhaltungen:
- WO-A-85/03749
- DE-A- 3 318 945
- DE-A- 4 107 976
- DE-A- 19 839 481
- DE-U- 9 100 650
- FR-A- 2 308 013
- US-A- 5 199 801
- US-A- 5 518 093

## Beschreibung

### Anwendungsgebiet der Erfindung

Die Erfindung betrifft ein Achsgetriebe gemäß Oberbegriff des Anspruchs 1.

### Hintergrund der Erfindung

Ein zweireihiges Schrägkugellager eines solch gattungsgemäßen Achsgetriebes ist aus der DE-A-19839481 vorbekannt. Das in dieser Vorveröffentlichung gezeigte Lager weist einen Innenring und einen Außenring auf, die beide mit Schultern versehen sind, an denen sich die Kugelreihen bei Krafteinwirkung abstützen. Jede Kugelreihe ist in einem getrennten Käfig untergebracht.

Nachteilig dabei ist, dass bei einem nicht vorhandenen Außenring beide Kugelkränze vom Innenring in axialer Richtung abgleiten können. Nun sind aber Einbaufälle denkbar, bei denen zunächst einer der Lagerringe auf einer Welle oder in einem Gehäuse zu fixieren und gleichzeitig ein Halten der Wälzkörper auf diesem Lagerbauteil zu gewährleisten ist, bevor durch Hinzufügen des fehlenden Lagerbauteiles die komplette Lagerbaueinheit gebildet werden kann.

### Zusammenfassung der Erfindung

Der Erfindung liegt daher die Aufgabe zugrunde, ein gattungsgemäßes Wälzlager so weiterzuentwickeln, dass dessen Montage wesentlich vereinfacht ist.

Erfindungsgemäß wird diese Aufgabe nach dem kennzeichnenden Teil von Anspruch 1 in Verbindung mit dessen Oberbegriff dadurch gelöst, dass beide Käfige aus einem Kunststoff ausgebildet sind und einer der Käfige an seinem axial nach innen gerichteten Ende mit mehreren gleichmäßig in Umfangsrichtung voneinander beabstandeten Abstandshaltern und mehreren gleichmäßig in Umfangsrichtung voneinander beabstandeten Haltenasen versehen ist, die in eine zugehörige Nut des Innen- oder Außenringes eingreifen, wobei die Abstandshalter des einen Käfigs ein axiales Verschieben des anderen Käfigs verhindern.

Durch diese erfindungsgemäße Ausbildung des mit Abstandshaltern und Haltenasen versehenen Käfigs ist sichergestellt, dass bei einem abgezogenen Lagerring die beiden Kugelkränze von dem Lagerring, auf dem sie sich befinden, nicht abfallen können. Dies wird dadurch erreicht, dass einerseits der Käfig mit Haltenasen in der Nut des Innen- oder Außenringes verankert ist und andererseits der Abstandshalter verhindert, dass der zweite Käfig seine gegenüber der Laufbahn eingenommene Position in axialer Richtung verlassen kann. Der Vorteil liegt insbesondere darin, dass die Wälzkörper zunächst mit einem der Lagerringe zu einer unverlierbaren Teillagerbaueinheit verbindbar sind, bevor durch Hinzufügen des fehlenden Lagerbauteiles die komplette Lagerbaueinheit gebildet ist.

Vorteilhafte Ausgestaltungen der Erfindung sind in den Unteransprüchen 2 bis 4 beschrieben.

So ist nach Anspruch 2 vorgesehen, dass die radial nach innen gerichteten Abstandshalter des einen Käfigs den anderen Käfig wenigstens teilweise radial überdecken und die radial nach außen gerichteten Haltenasen in die Nut des Außenringes eingreifen.

In Umkehrung dieser Anordnung ist nach Anspruch 3 vorgesehen, dass die radial nach außen gerichteten Abstandshalter des einen Käfigs den anderen Käfig wenigstens teilweise radial überdecken und die radial nach innen gerichteten Haltenasen in die Nut des Innenringes eingreifen.

Nach einem anderen zusätzlichen Merkmal gemäß Anspruch 4 ist vorgesehen, dass die Taschen der Käfige mit Halteelementen versehen sind.

### Kurze Beschreibung der Zeichnungen

Es zeigen:
- Figuren 1 und 2: eine erfindungsgemäße Lageranordnung mit in einer Nut des Außenringes eingeschnappten Haltenasen,
- Figuren 3 und 4: eine erfindungsgemäße Lageranordnung mit in einer Nut des Innenringes eingeschnappten Haltenasen,
- Figur 5: eine perspektivische Darstellung eines erfindungsgemäß ausgestalteten Käfigs,
- Figuren 6 und 7: einen Längsschnitt durch eine nicht erfindungsgemäße Lageranordnung mit gleichem Teilkreisradius und
- Figur 8: einen Längsschnitt durch ein Achsgetriebe für ein Kraftfahrzeug.

### Ausführliche Beschreibung der Zeichnungen

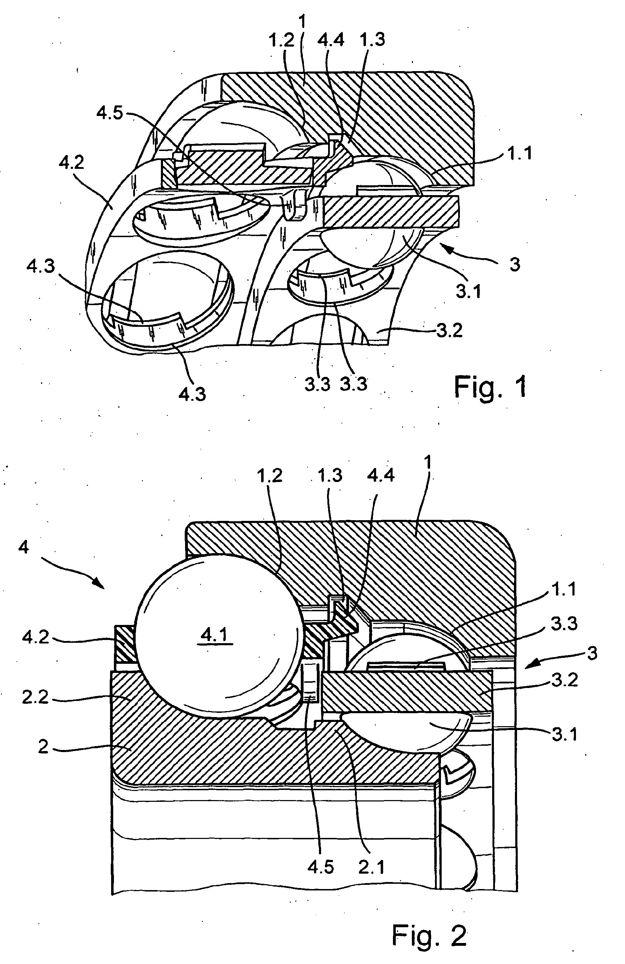

Die in den Figuren 1 und 2 dargestellte Lageranordnung besteht aus dem Außenring 1 und dem Innenring 2, zwischen denen auf zugehörigen Laufbahnen Kugelkränze 3, 4 angeordnet sind, die aus Lagerkugeln 3.1, 4.1 und zugehörigen Käfigen 3.2, 4.2 bestehen. Beide Käfige 3.2, 4.2 sind mit Halteelementen 3.3, 4.3 versehen, die ein Verlassen der Lagerkugeln 3.1, 4.1 aus dem zugehörigen Käfig 3.2, 4.2 in radialer Richtung nach außen und nach innen verhindern sollen. Beide Lagerringe 1, 2 sind mit zugehörigen Schultern 1.1, 1.2, 2.1, 2.2 ausgestattet, an denen die Lagerkugeln 3.1, 4.1 anliegen, wobei, wie ebenfalls erkennbar, beide Kugelkränze 3, 4 einen unterschiedlichen Teilkreisradius und einen unterschiedlichen Durchmesser der Kugellaufbahnen aufweisen.

Wie die Figuren 1 und 2 weiter zeigen, ist der Käfig 4.2 in erfindungsgemäßer Weise an seiner in Richtung Lagerinneres weisenden Stirnseite mit mehreren gleichmäßig in Umfangsrichtung voneinander beabstandeten Haltenasen 4.4 versehen, die in eine zugehörige Nut 1.3 des Außenringes 1 eingreifen. Darüber hinaus weist der Käfig 4.2 mehrere radial nach innen gerichtete Abstandshalter 4.5 auf, die den Käfig 3.2 in radialer Richtung zumindest teilweise überdecken. Diese Abstandshalter 4.5 des Käfigs 4.2 halten den Kugelkranz 3 in seiner gewünschten Position gegenüber der Laufbahn des Außenringes 1. Der axiale Verschiebeweg des Käfigs 3.2 gegenüber dem Käfig 4.2 dürfte dabei unter 1mm liegen. Auf diese Weise ist sichergestellt, dass bei einem abgezogenen Innenring 2 gemäß Figur 1 die beiden Kugelkränze 3, 4 nicht vom Außenring 1 herunterfallen können. Dadurch wird die Montage der kompletten Lagerbaueinheit wesentlich vereinfacht.

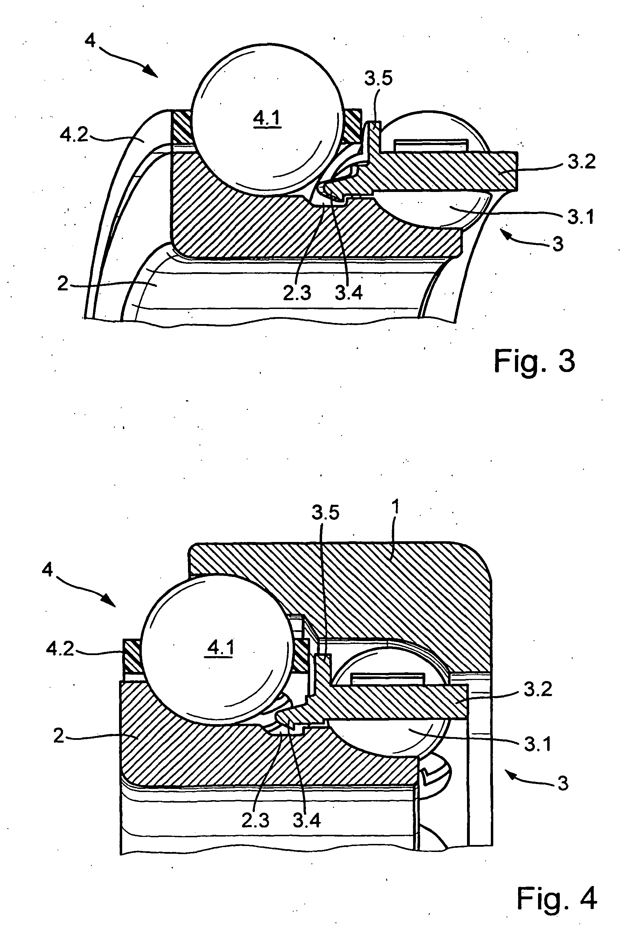

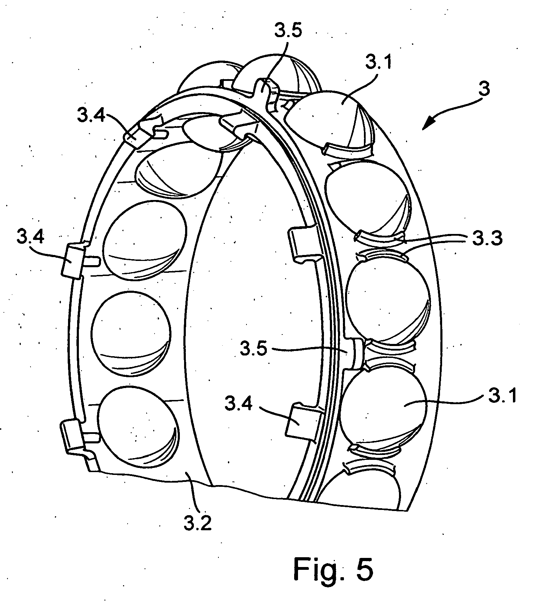

Die Figuren 3 ,4 und 5 zeigen eine Lageranordnung bzw einen Käfig 3.2 in erfindungsgemäß veränderter Bauweise derart, dass die Kugelkränze 3, 4 auf dem Innenring 2 gehalten sind. Dazu ist der Käfig 3.2 an seiner in Richtung Lagerinneres weisenden Stirnseite mit mehreren gleichmäßig in Umfangsrichtung voneinander beabstandeten Haltenasen 3.4 versehen, die in eine zugehörige Nut 2.3 des Innenringes 2 eingreifen. Darüber hinaus ist der Käfig 3.2 mit in radialer Richtung nach außen weisenden, gleichmäßig voneinander in Umfangsrichtung beabstandeten Abstandshaltern 3.5 versehen, die den Käfig 4.2 zumindest in radialer Richtung teilweise überdecken und so dessen axiales Verschieben verhindern. Auf diese Weise ist eine aus den Bestandteilen 2, 3 und 4 bestehende unverlierbare Teillagerbaueinheit gebildet, die sicher handhabbar und durch Hinzufügen des fehlenden Außenringes 1 später komplettierbar ist.

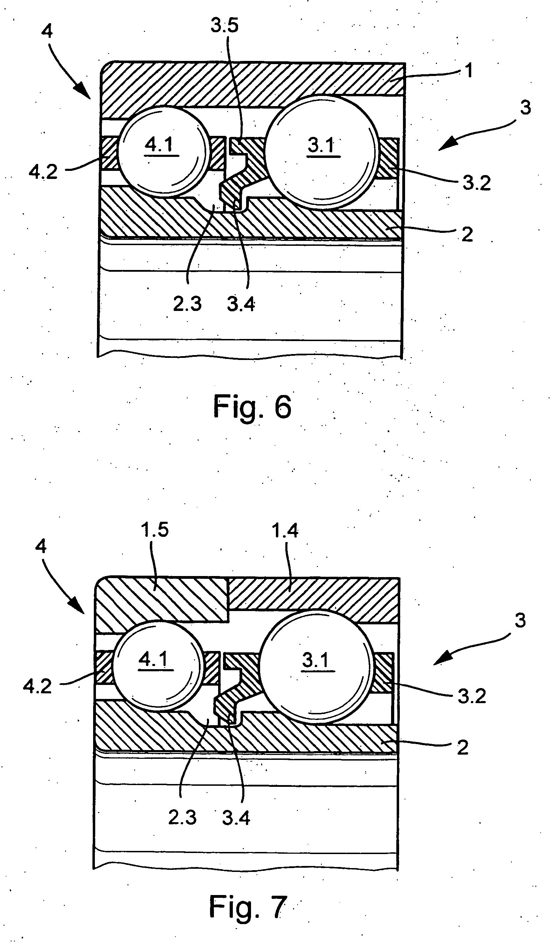

In Figur 6 ist eine nicht erfindungsgemäße Lageranordnung gezeigt, deren Kugelkränze 3, 4 den gleichen Teilkreisradius, aber einen unterschiedlichen Durchmesser der Lagerkugeln 3.1, 4.1 aufweisen. Die beiden Käfige 3.2, 4.2 sind in etwa in der gleichen Radialebene liegend angeordnet, wobei der Käfig 3.2 mit Haltenasen 3.4 versehen ist, die in die Nut 2.3 des Innenringes 2 eingreifen.

Bei abgezogenem Außenring 1 ist somit sichergestellt, dass die Kugelkränze 3 und 4 vom Innenring 2 nicht herabfallen können. Genauso gut wäre die umgekehrte Verfahrensweise denkbar, bei der die Haltenasen 3.4 des Käfigs 3.2 in eine Nut des Außenringes 1 eingreifen würden. Im Gegensatz zu den in den Figuren 1 bis 4 gezeigten Lageranordnungen sind hier die Abstandshalter 3.5 axial ausgerichtet, da sich beide Käfige 3.2, 4.2 in einer Radialebene befinden.

Wie die Figur 7 zeigt, kann an der der Verschnappung gegenüberliegenden Seite der Außenring 1 auch zweiteilig ausgebildet sein, wobei die beiden Teilringe 1.4, 1.5 mit ihren Schultern gegenüberliegend angeordnet sind.

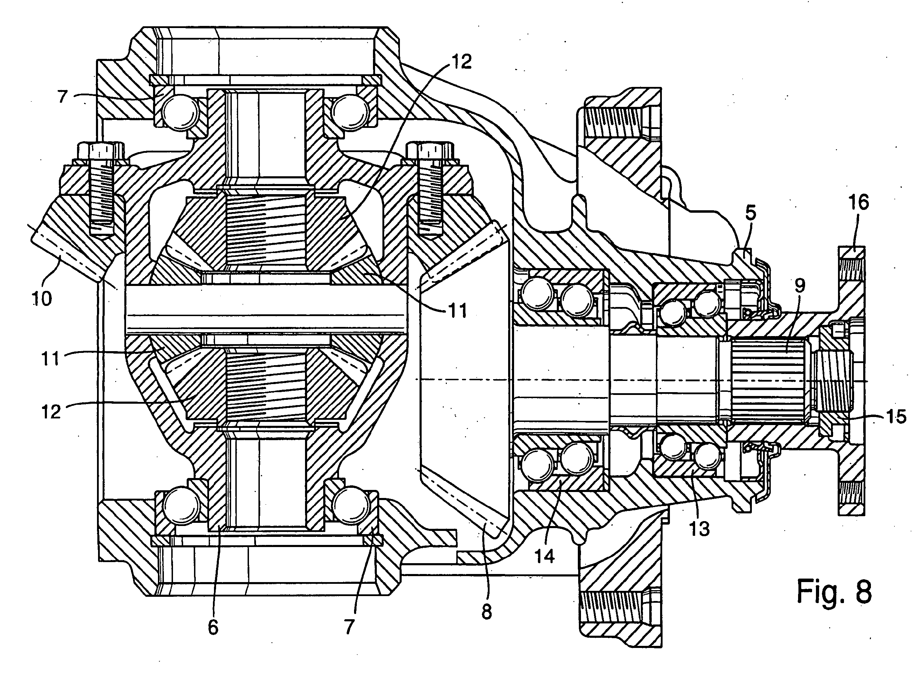

Das in Figur 8 dargestellte Kraftfahrzeug-Achsgetriebe weist ein Gehäuse 5 auf, in dem ein Ausgleichsgetriebe 6 über zwei Schrägkugellager 7 gelagert ist. Ein Kegelritzel 8 einer Kegelritzelwelle 9 treibt ein Tellerrad 10 an, dass wiederum das Ausgleichsgetriebe 6 in Bewegung setzt. Das Ausgleichsgetriebe 6 ist über Ausgleichsräder 11 und Abtriebsräder 12 mit je einer nicht dargestellten Achswelle verbunden, die ebenfalls nicht dargestellte Räder antreiben. Die Kegelritzelwelle 9 ist im Gehäuse 5 über zwei voneinander beabstandete zweireihige Schrägkugellager 13, 14 gehalten, die durch ein Gewindeteil 15 über die Nabe 16 aufeinander zubewegt, dass heißt, unter Vorspannung gesetzt sind. Die beiden Schrägkugellager 13, 14 sind in der erfindungsgemäß beschriebenen Weise ausgebildet, wobei deren Kugelkränze über ihre Käfige zunächst auf den Lagerinnenringen zu fixieren sind, bevor durch Zusammenführen von Kegelritzelwelle 9 und Gehäuse 5 mit eingepressten Lageraußenringen das Achsgetriebe komplettiert ist.

### Bezugszeichen

- 1: Außenring
- 1.1: Schulter
- 1.2: Schulter
- 1.3: Nut
- 1.4: Teilring
- 1.5: Teilring
- 2: Innenring
- 2.1: Schulter
- 2.2: Schulter
- 2.3: Nut
- 3: Kugelkranz
- 3.1: Lagerkugel
- 3.2: Käfig
- 3.3: Halteelement
- 3.4: Haltenase
- 3.5: Abstandshalter
- 4: Kugelkranz
- 4.1: Lagerkugel
- 4.2: Käfig
- 4.3: Halteelement
- 4.4: Haltenase
- 4.5: Abstandshalter
- 5: Gehäuse
- 6: Ausgleichsgetriebe
- 7: Kugellager
- 8: Kegelritzel
- 9: Kegelritzelwelle
- 10: Tellerrad
- 11: Ausgleichsrad
- 12: Abtriebsrad
- 13: Schrägkugellager
- 14: Schrägkugellager
- 15: Gewindeteil
- 16: Nabe

## Patentansprüche

1. Achsgetriebe für ein Kraftfahrzeug,mit einer Kegelritzelwelle (9), die über zwei voneinander beabstandete und axial vorgespannte Wälzlager in einem Getriebegehäuse (5) gelagert ist und die mit einem Kegelritzel (8) über ein Tellerrad (10) ein im Getriebegehäuse (1) gelagertes Ausgleichsgetriebe (6) antreibt, wobei im Ausgleichsgetriebe (6) Achswellen gelagert sind, die über Abtriebs- (12) und Ausgleichsräder (11) miteinander in Wirkverbindung stehen, wobei die Wälzlager als zweireihige Schrägkugellager mit einem einteiligen Außen- (1) und einem einteiligen Innenring (2) ausgebildet sind, an deren Schultern (1.1, 1.2, 2.1, 2.2) sich in je einem Käfig (3.2, 4.2) geführte Lagerkugeln (3.1, 4.1) abstützen, der Durchmesser der Kugellaufbahnen jedes Wälzlagers unterschiedlich groß ist, beide Kugelkränze (3, 4) einen unterschiedlichen Teilkreisradius aufweisen und beide Käfige (3.2, 4.2) als Fensterkäfige mit die Lagerkugeln (3.1, 4.1) aufnehmenden Taschen ausgebildet sind **dadurch gekennzeichnet, dass** einer der aus einem Kunststoff bestehenden Käfige (3.2, 4.2) an seinem axial nach innen gerichteten Ende mit mehreren gleichmäßig in Umfangsrichtung voneinander beabstandeten Abstandshaltern (3.5, 4.5) und mehreren gleichmäßig in Umfangsrichtung voneinander beabstandeten Haltenasen (3.4, 4.4) versehen ist, die in eine zugehörige Nut (2.3, 1.3) des Innen-(2) oder Außenringes (1) eingreifen, wobei die Abstandshalter (3.5, 4.5) des einen Käfigs (3.2, 4.2) ein axiales Verschieben des anderen Käfigs (4.2, 3.2) verhindern.

2. Achsgetriebe nach Anspruch 1, **dadurch gekennzeichnet, dass** die radial nach innen gerichteten Abstandshalter (4.5) des einen Käfigs (4.2) den anderen Käfig (3.2) wenigstens teilweise radial überdecken und die radial nach außen gerichteten Haltenasen (4.4) in die Nut (1.3) des Außenringes (1) eingreifen.

3. Achsgetriebe nach Anspruch 1, **dadurch gekennzeichnet, dass** die radial nach außen gerichteten Abstandshalter (3.5) des einen Käfigs (3.2) den anderen Käfig (4.2) wenigstens teilweise radial überdecken und die radial nach innen gerichteten Haltenasen (3.4) in die Nut (2.3) des Innenringes (2) eingreifen.

4. Achsgetriebe nach Anspruch 1, **dadurch gekennzeichnet, dass** die Taschen der Käfige (3.2, 4.2) mit Halteelementen (3.3, 4.3) versehen sind.

## Claims

1. Final drive unit for a motor vehicle, having a tapered pinion shaft (9), which is supported by two spaced axially preloaded roller bearings in a transmission case (5) and which by means of a tapered pinion (8) and via a ring gear (10) drives a differential (6) supported in the transmission case (1), axle shafts operatively connected to one another by output gears (12) and differential gears (11) being supported in the differential (6), the roller bearings taking the form of double-row, angular contact ball bearings with a one-piece outer race (1) and a one-piece inner race (2), on the shoulders (1.1, 1.2, 2.1, 2.2) of which the bearing balls (3.1, 4.1) are supported, each carried in a cage (3.2, 4.2), the diameters of the ball tracks of each roller bearing being different, the two ball rims (3, 4) having a different pitch radius and the two cages (3.2, 4.2) taking the form of window cages with pockets accommodating the bearing balls (3.1, 4.1), **characterized in that** one of the cages (3.2, 4.2) composed of a plastic material is provided at its axially inward-facing end with multiple spacers (3.5, 4.5) uniformly spaced in a peripheral direction and multiple retaining lugs (3.4, 4.4) uniformly spaced in a peripheral direction, which engage in an associated groove (2.3, 1.3) in the inner race (2) or the outer race (1), the spacers (3.5, 4.5) of one cage (3.2, 4.2) preventing an axial displacement of the other cage (4.2, 3.2).

2. Final drive unit according to Claim 1, **characterized in that** the radially inwards-facing spacers (4.5) of one cage (4.2) at least partially radially overlap the other cage (3.2) and the radially outwards facing retaining lugs (4.4) engage in the groove (1.3) in the outer race (1).

3. Final drive unit according to Claim 1, **characterized in that** the radially outwards-facing spacers (3.5) of one cage (3.2) at least partially radially overlap the other cage (4.2) and the radially inwards facing retaining lugs (3.4) engage in the groove (2.3) in the inner race (2).

4. Final drive unit according to Claim 1, **characterized in that** the pockets of the cages (3.2, 4.2) are provided with holding elements (3.3, 4.3).

## Revendications

1. Transmission d'essieu pour un véhicule automobile, avec un arbre à pignon conique (9), qui par l'intermédiaire de deux roulements écartés l'un de l'autre et précontraints en direction axiale est logé dans un carter de boîte de vitesses (5) et qui avec un pignon conique (8) entraîne par l'intermédiaire d'une couronne de différentiel (10) un différentiel (6) logé dans le carter de boîte de vitesses (1), des arbres primaires qui sont en liaison active mutuelle par l'intermédiaire de roues de réduction (12) et de roues d'équilibrage (11) étant logés dans le différentiel (6), les roulements étant conçus sous la forme de roulements à contact oblique à double rangée de billes avec une bague extérieure (1) en un élément et une bague intérieure (1) en un élément, sur les épaulements (1.1, 1.2, 2.1, 2.2) desquelles s'appuient des billes de roulement (3.1, 4.1) guidées à chaque fois dans une cage (3.2, 4.2) et le diamètre des chemins de roulement à billes de chaque roulement étant de dimensions différentes, les deux couronnes de billes (3, 4) présentant un rayon primitif de référence différent et les deux cages (3.2, 4.2) étant conçues sous la forme de cages à fenêtre, avec des poches réceptionnant les billes de roulement (3.1, 4.1), **caractérisé en ce que** l'une des cages (3.2, 4.2) consistant dans une matière plastique est munie sur son extrémité dirigée vers l'intérieur en direction axiale de plusieurs écarteurs (3.5, 4.5) présentant un écart mutuel régulier en direction périphérique et de plusieurs tenons de retenue (3.4, 4.4) présentant un écart mutuel régulier en direction périphérique, qui s'engagent dans une rainure (2.3, 1.3) associée de la bague intérieure (2) ou de la bague extérieure (1), les écarteurs (3.5, 4.5) de l'une des cages (3.2, 4.2) empêchant un déplacement axial de l'autre cage (4.2, 3.2).

2. Transmission d'essieu selon la revendication 1, **caractérisé en ce que** les écarteurs (4.5) dirigés vers l'intérieur en direction radiale de l'une des cages (4.2) recouvrent au moins partiellement l'autre cage (3.2) en direction radiale et **en ce que** les tenons de retenue (4.4) dirigés vers l'extérieur en direction radiale s'engagent dans la rainure (1.3) de la bague extérieure (1).

3. Transmission d'essieu selon la revendication 1, **caractérisé en ce que** les écarteurs (3.5) dirigés vers l'extérieur en direction radiale de l'une des cages (3.2) recouvrent au moins partiellement l'autre cage (4.2) en direction radiale et **en ce que** les tenons de retenue (3.4) dirigés vers l'intérieur en direction radiale s'engagent dans la rainure (2.3) de la bague intérieure (2).

4. Transmission d'essieu selon la revendication 1, **caractérisé en ce que** les poches des cages (3.2, 4.2) sont munies d'éléments de retenue (3.3, 4.3).
